# EUROPEAN PATENT APPLICATION

(11) **EP 4 203 439 A1**
(43) Date of publication of application: **28.06.2023**
(21) Application number: 21306945.3
(22) Date of filing: 27.12.2021
(51) Int. Cl.: H04L 67/00, H04W 4/38, H04L 69/18

(54) **SENSOR MODULE USING LOW-POWER COMMUNICATION PROTOCOLS**

(71) Applicant: Demand Side Instruments, 14000 Caen (FR)
(72) Inventor: PAWLUS, François, Caen (FR); RIALLOT, Paul, Caen (FR)
(74) Representative: Grünecker Patent- und Rechtsanwälte PartG mbB

(57) **Abstract**

Sensor module (100), comprising a first transceiver (101) configured to communicate over a first low-power communication protocol with a first duty cycle, wherein the first low-power communication protocol is the LoRaWAN protocol, a second transceiver (102) configured to communicate over a second low-power communication protocol with a second duty cycle, wherein the second low-power communication protocol is a protocol based on LoRa techniques, wherein the second duty cycle is higher than the first duty cycle, and a data acquisition module (103) configured to acquire data from one or more devices (120, 401 - 406), wherein the sensor module (100) is configured to receive configuration data via the first transceiver (101), and to transmit the data acquired from the one or more devices (120, 401 - 406) via the second transceiver (102).

## Description

### Field of the invention

The present invention relates to a sensor module using at least two different low-power communication protocols, and a method for operating such a sensor module.

### Background

The Internet-of-Things (loT) has become more and more important during the last decade. Remote controlled smart devices have become commonplace in technical fields like agriculture, industry and the control of various devices within buildings ("smart buildings"). Such smart devices usually include on-board electronics to collect data, control processes, and communicate with other devices and hubs for data collection, analysis and control.

Since it is desirable that the smart devices operate energy-efficiently, they usually use low-power wide-area network (LPWAN) protocols. One example of such a protocol is the LoRaWAN standard, which employs LoRa, a wireless modulation technique based on chirp spread spectrum technology. The advantage of the LoRa is that the modulated transmission is robust against disturbances and can be received across large distances.

LoRaWAN is a Media Access Control layer protocol built on top of a LoRa modulation, and defines how devices use LoRa hardware, for example, at which times they transmit data, or the data format of messages. LoRaWAN provides several transmission bands for use. For example, in Europe, LoRaWAN provides 10 channels in a frequency band between 867 and 869 MHz. In North America, LoRaWAN provides a total of 72 uplink channels and 8 downlink channels in a frequency band between 902 and 928 MHz.

In the following, the term duty cycle is used as it is usually understood in the field of LPWAN protocols, i.e., it refers to the percentage of time in which a certain device transmits on a channel. In other words, when a device transmits for 10 time units every 100 time units, its duty cycle is 10%.

In Europe, the duty cycles for LoRaWAN are regulated by the ETSI EN300.220 standard, which defines six sub-bands and corresponding duty cycles. Depending on the band, the duty cycle is set to 0.1%, 1%, or 10%, with 1% being the most common value used for four out of the six sub-bands.

In the LoRaWAN protocol, the amount of data that can be transmitted in a given time further depends on the spread factor, which can range from 7 to 12. A higher spread factor allows for a better resolution of the signal, which is useful if the transmitter and receiver are placed far apart, or if there are obstructions between the transmitter and the receiver. On the other hand, a high spread factor also means that less data can be transmitted in a given time window.

In consequence, this means that users have to compromise between the amount of data, the upload frequency, i.e., the time interval between two transmissions, and the transmission quality. It is therefore the object of the present invention to provide a sensor module that allows for the transfer of larger amounts of data while still being energy-efficient.

### Summary of the invention

This object is achieved with a sensor module according to claim 1. Preferred embodiments are set forth in the dependent claims.

The sensor module comprises a first transceiver configured to communicate over a first low-power communication protocol with a first duty cycle, wherein the first low-power communication protocol is the LoRaWAN protocol, a second transceiver configured to communicate over a second low-power communication protocol with a second duty cycle, wherein the second low-power communication protocol is a protocol based on LoRa techniques, in particular wherein the second low-power communication protocol is different from the first low-power communication protocol, and a data acquisition module configured to acquire data from one or more devices. The second duty cycle is higher than the first duty cycle, and the sensor module is configured to receive and transmit configuration data via the first transceiver, and to transmit the data acquired from the one or more devices via the second transceiver.

As indicated above, the duty cycle is the percentage of time allocated to the sensor module for transmission.

Since the duty cycle of the second low-power communication protocol is higher than that of the first low-power communication protocol, the data, which has been acquired from the one or more devices, can be transmitted more often and can comprise larger payloads than in conventional LoRaWAN systems. Data which has been acquired from the one or more devices is in the following also referred to as "business data" in order to distinguish it from other data, such as configuration or status data. The ability to transmit data more often and with larger payloads is, for example, particularly useful in the management of large smart buildings, such as office buildings or large apartment complexes.

At the same time, data which does not need to be transmitted very often, and which is not large, such as configuration data or status data, is sent via the conventional LoRaWAN protocol. This has the advantage that the sensor module can easily be integrated into existing LoRaWAN systems.

The first transceiver and the second transceiver and/or the processor may be integrated on one circuit board. It is also possible that the sensor module comprises separate circuit boards for the first transceiver and/or the second transceiver and/or the processor. In this case, the separate boards may be connected. For example, the first transceiver and the processor may be provided on a common motherboard, while the second transceiver is provided on a daughter board, which is connected to the motherboard.

The first duty cycle may be between 0.1% and 10%. The second duty cycle may be between 50% and 100%. Preferably, the second duty cycle is 100%. This allows a particularly high transmission rate of the acquired data.

The operation frequency of the second low-power communication protocol may be 2.4 GHz. Within LoRa, this frequency band has no duty cycle assigned to it. Thus, the second duty cycle may be 100%, allowing for a high transmission rate of the acquired data.

The sensor module may be configured to configure the second transceiver and/or the interface and/or the one or more devices based on the configuration data received via the first transceiver. This makes the integration of the sensor module in an existing LoRaWAN system particularly convenient, since the setup of the sensor module and the one or more devices can be performed within the existing framework. In particular, the network properties of the second transceiver may be configured via the configuration data received via LoRaWAN.

The sensor module may further comprise a processor configured to perform operations on the data acquired from the one or more devices. In particular, the processor may be configured to perform rudimentary data analysis and/or data compression and/or data transformation operations on the acquired data. For example, the processor may be configured to convert a measured voltage value into a current value or vice versa. Alternatively or additionally, the processor may be configured to compare the acquired data values to a threshold value. By performing rudimentary data analysis and/or data compression and/or data transformation operations on the acquired data, a more efficient transmission of business data can be achieved.

The processor may further be configured to schedule the transmission of the acquired data via the second transceiver based on the configuration data and/or the acquired data. For example, the configuration data may indicate that transmission of the acquired data should be transmitted in fixed intervals. It may also indicate that acquired data should be transmitted as soon as it is acquired. It may also indicate that the data should be transmitted based on a threshold value. For example, it may indicate that transmission only occurs if data values in the acquired data exceed a threshold value or fall below a threshold value. This way, the efficiency of the business data transmission may be further improved.

The data acquisition module may comprise an analog-digital-converter. Thus, data from a wide variety of external devices may be recorded and digitized by the sensor module.

The data acquisition module may further comprise one or more interfaces for connection to other measurement devices. The one or more interfaces may be wireless interfaces and/or physical interfaces. In particular, one of the one or more interfaces may be a wireless M-Bus (WMBUS) receiver. A sensor module with this data acquisition module is particularly suitable for use in smart buildings.

The one or more devices may comprise a sensor, in particular a pressure sensor and/or a temperature sensor and/or a voltage meter and/or a current meter and/or a gas meter and/or a water meter and/or an electricity meter and/or a pulse counter and/or a flow meter. A sensor module comprising or configured to receive data from such types of sensors is suitable for a wide variety of applications.

The sensor module may further comprise a battery. In particular, the battery may be rechargeable. This allows the sensor module to operate autonomously.

The sensor module may further comprise a physical interface. In particular, the sensor module may comprise a USB interface. The physical interface may be used to transfer data to the sensor module. For example, the physical interface may be used to transfer configuration data to the sensor module. In another example, the physical interface may be used to update the firmware of the processor and/or the first transceiver and/or the second transceiver. Alternatively or additionally, the physical interface may be used to recharge the battery of the sensor module. Further, the physical interface may be one of the one or more interfaces of the data acquisition module.

The sensor module may further comprise a memory. The memory may be configured to store configuration data and/or measurement data.

The invention further provides a system comprising a sensor module and further comprising a third transceiver configured to receive the data acquired from the one or more device transmitted via the second transceiver using the second low-power communication protocol. The sensor can have one or more of the above-defined features.

The system may further comprise a LoRaWAN gateway coupled to the third transceiver and configured to communicate with a remote server via a wireless broadband communication protocol. The remote server may be located on a cloud network, in particular a cloud network connected to the Internet. Thus, the LoRaWAN gateway is the interface between the closed network, in which the measurement devices and sensor modules are located, and a cloud network, in particular the Internet. In particular, the wireless broadband communication protocol may be a protocol according to the Long-Term Evolution (LTE) standard, the 5G standard, or the 6G standard. However, any suitable wireless broadband communication protocol may be used. It is also possible that the LoRaWAN gateway is configured to communicate with the remote server via an Ethernet connection.

The system may further comprise the one or more devices. In particular, the system may comprise a pressure sensor and/or a temperature sensor and/or a voltage meter and/or a current meter and/or a gas meter and/or a water meter and/or an electricity meter and/or a pulse counter and/or a flow meter. Such a system can be used to monitor and control all of the relevant devices in a smart building.

A system as described above enables efficient communication between a remote server, in particular a server located in a computing cloud, and the one or more devices.

The invention further provides a method for operating a sensor module comprising the steps:
- receiving configuration data over a first low-power communication protocol with a first duty cycle, wherein the first low-power communication protocol is the LoRaWAN protocol,
- acquiring data from one or more devices, and
- transmitting the data acquired from the one or more devices over a second low-power communication protocol with a second duty cycle, wherein the second low-power communication protocol is a protocol based on LoRa techniques.

The second duty cycle is higher than the first duty cycle.

The sensor can have one or more of the features defined further above.

Since the duty cycle of the second low-power communication protocol is higher than that of the first low-power communication protocol, the data, which has been acquired from the one or more devices, can be transmitted more often and can be larger than in conventional LoRaWAN systems. This is, for example, particularly useful in the management of large smart buildings, such as office buildings or large apartment complexes.

At the same time, data, which does not need to be transmitted very often, and which is not large, such as configuration data, is sent via the conventional LoRaWAN protocol. This has the advantage that the sensor module can easily be integrated into existing LoRaWAN systems.

The method may further comprise transmitting the data acquired from the one or more devices to a remote server via a wireless communication protocol. This way, the data may be transmitted to a cloud server for further processing and/or presentation.

The method may further comprise performing operations on the data acquired from the one or more devices. In particular, the method may comprise performing rudimentary data analysis and/or data compression and/or data transformation operations on the acquired data. For example, a measured voltage value may be converted into a current value or vice versa. Alternatively or additionally, the method may comprise comparing the acquired data values to a threshold value. By performing rudimentary data analysis and/or data compression and/or data transformation operations on the acquired data, a more efficient data transmission is possible.

The method may further comprise scheduling the transmission of the acquired data via the second transceiver based on the configuration data and/or the acquired data. For example, the configuration data may indicate that transmission of the acquired data should be transmitted in fixed intervals. It may also indicate that acquired data should be transmitted as soon as it is acquired. It may also indicate that the data should be transmitted based on a threshold value. For example, it may indicate that transmission only occurs if data values in the acquired data exceed a threshold value or fall below a threshold value. This way, the efficiency of the data transmission may be further improved.

In particular, the data may comprise data from a sensor, in particular a pressure sensor and/or a temperature sensor and/or a voltage meter and/or a current meter and/or a gas meter and/or an electricity meter.

### Brief description of the drawings

Advantageous embodiments will now be described in combination with the enclosed figures.
- Figure 1: schematically shows a sensor module;
- Figure 2: schematically shows a system comprising a sensor module, a LoRaWAN gateway, and a remote server.

### Detailed description of the invention

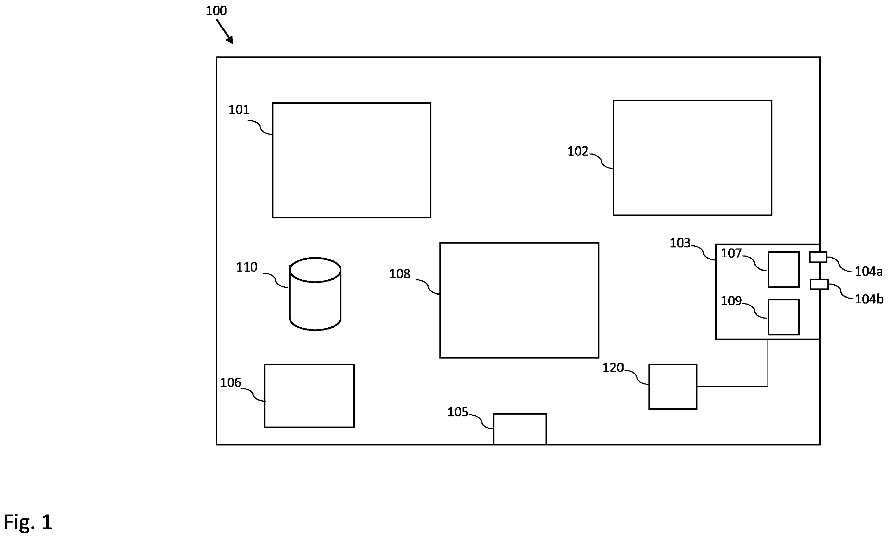

Figure 1 schematically shows a sensor module 100. The illustrated sensor module 100 comprises a first transceiver 101 and a second transceiver 102. The first transceiver 101 is configured to send and receive data via the LoRaWAN standard on a frequency band between 867 and 869 MHz. The duty cycle for the first transceiver is between 0.1 % and 10%. The first transceiver 101 is used to communicate with a LoRaWAN gateway 200 (not shown in Figure 1). The first transceiver 101 can receive configuration data, in particular for the sensor module 100. The first transceiver 101 can also send status data to the LoRaWAN gateway 200.

The second transceiver 102 is configured to send and receive data using a protocol based on LoRa. In the illustrated embodiment, the second transceiver 102 operates on a frequency of 2.4GHz. The duty cycle for the second transceiver 102 is between 50% and 100%. The second transceiver 102 communicates with a third transceiver 201 (not shown in Figure 1), which is connected to the LoRaWAN gateway 200. The second transceiver 102 is used to transfer business data from the sensor module 100 to the LoRaWAN gateway 200.

The sensor module 100 further includes a data acquisition module 103. The data acquisition module 103 is configured to receive data from one or more devices. In the sensor module 100 illustrated in Figure 1, a device 120 is included in the sensor module 100. In the illustrated case, the device 120 is a temperature sensor. The device 120 may be any measurement device which can be suitably provided on the sensor module 100. Further, the sensor module 100 is not limited to comprising only one device 120.

The sensor module 100 comprises additional interfaces for connections with external devices device 401 - 406 (not shown in Figure 1). The further interfaces can be physical and/or wireless interfaces. In the embodiment illustrated in Figure 1, the data acquisition module 103 comprises two physical inputs 104a and 104b, and a WMBUS receiver 107. In the illustrated embodiment, the physical input 104a is configured for the input of current, in particular in the range of 4 mA to 20 mA. Further, in the illustrated embodiment, the physical input 104b is configured for the input of voltage signals, in particular in the range of 0 V to 10 V. The WMBUS receiver 107 is configured to wirelessly receive measurement data from one or more of the external devices 401 - 406.

The data acquisition module 103 receives data from the devices 120 and 401 - 406 and can perform initial operations on the data. For example, in the sensor module 100 illustrated in Figure 1, the data acquisition module 103 comprises an analog-to-digital converter 109 to convert analog measurement values which have, for example, been received via the physical interface 104a and 104b into a digital signal.

The sensor module 100 further comprises a battery 106 so that it can operate without external power supply.

The sensor module 100 further comprises a physical interface 105. In the illustrated embodiment, the physical interface 105 is a USB interface. The physical interface 105 can be used to recharge the battery 106. It can further be used to transfer data to the sensor module 100.

The sensor module 100 further comprises a processor 108. The processor 108 is configured to configure the components of the sensor module 100 and/or the external devices 401 - 406. In particular, the processor 108 configures the second transceiver 102, the data acquisition module 103, and the device 120 based on the configuration data received via the first transceiver 101 and/or the physical interface 105. For example, the processor 108 configures the network address of the second transceiver 102 based on the configuration data. The processor 108 can also set a data acquisition schedule for the data acquisition module 103, as well as transmission schedules for the first transceiver 101 and the second transceiver 102.

Further, the processor 108 may be configured to perform operations on the business data acquired by the data acquisition module 103. For example, the processor 108 may compress and/or format the business data such that it can be efficiently transmitted via the second transmitter 102.

The sensor module 100 further comprises a memory 110. The memory 110 may be configured to store configuration data and/or measurement data.

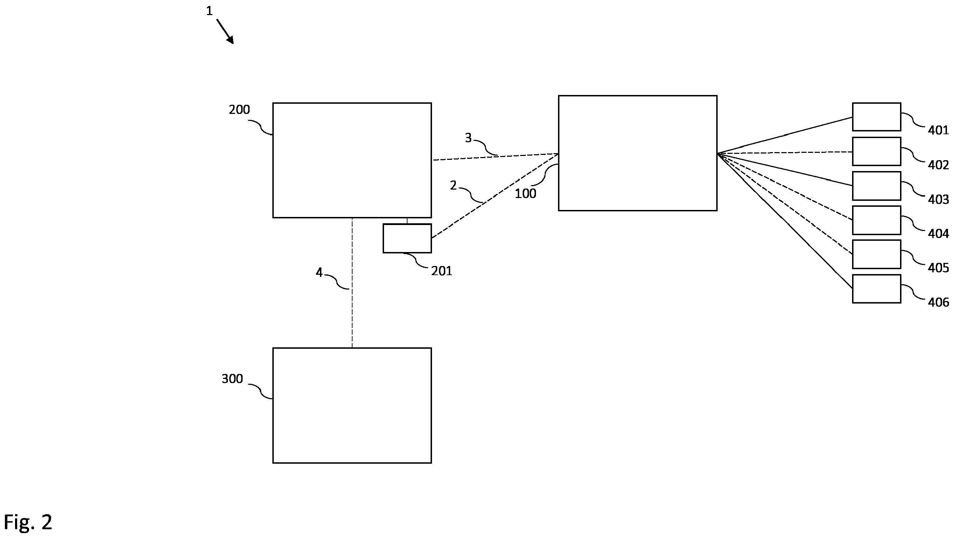

Figure 2 schematically shows a data acquisition system 1. The system 1 comprises a sensor module 100, which may be the sensor module illustrated in Figure 1. The system 1 further comprises a plurality of external devices 401 - 406. The devices 401 - 406 are measurement devices for a variety of different parameters. For example, the devices 401 - 406 may comprise a pressure sensor and/or a temperature sensor and/or a voltage meter and/or a current meter and/or a gas meter and/or a water meter and/or an electricity meter and/or a pulse counter and/or a flow meter.

As can be seen in Figure 2, the devices 401 - 406 are connected to the sensor module 100. In particular, the devices 401 - 406 are connected to interfaces of a data acquisition module of the sensor module 100. In the embodiment shown in Figure 2, the devices 401, 403, and 406 are connected to physical interfaces of the sensor module 100, as indicated by the solid lines connecting the devices and 401, 403, and 406 the sensor module 100.

In contrast, the devices 402, 404, and 405 are connected wirelessly to the sensor module 100, as indicated by the dashed lines connecting the devices and 402, 404, and 405, and the sensor module 100. In particular, devices 402, 404, and 405 communicate wirelessly with a WMBUS receiver of the sensor module 100.

The system 1 further comprises a LoRaWAN gateway 200 and a third transceiver 201. The third transceiver 201 is connected to the LoRaWAN gateway 200 and communicates with the sensor module 100 via the second transceiver of the sensor module 100. This communication channel uses the protocol based on LoRa at 2.4GHz described with reference to Figure 1 further above and is indicated with the dashed line 2. In the illustrated embodiment, the third transceiver 201 is coupled to the LoRaWAN gateway 200 in the form of a dongle, i.e., an external device that can be connected to the LoRaWAN gateway 200. However, it is to be understood that different couplings of the third transceiver 201 and the LoRaWAN gateway 200 are possible.

The LoRaWAN gateway 200 communicates with the sensor module 100 via the first transceiver of the sensor module 100. This communication channel uses the LoRaWAN standard on a frequency band between 867 and 869 MHz as described with reference to Figure 1 and is indicated with the dashed line 3.

The LoRaWAN gateway 200 further communicates with an external server 300. This communication channel uses a wireless broadband communication protocol according to the LTE standard, the 5G standard, the 6G standard, or any other suitable wireless broadband communication protocol, such as a Wi-Fi protocol, and is indicated with the dashed line 4. The communication channel 4 may also be implemented as a wireless or wired Ethernet connection.

In the system 1 shown in Figure 2, configuration data is sent from the LoRaWAN gateway 200 to the sensor module 100 via channel 3. The sensor module 100 uses channel 3 to send status information to the LoRaWAN gateway 200. The sensor module 100 further sends business data, which has been acquired from the devices 401 - 406 and/or an internal measurement device of the sensor module 100 to the third transceiver 201 via channel 2. The third transceiver 201 forwards the business data to the LoRaWAN gateway 200.

The LoRaWAN gateway 200 sends the business data to the external sever 300 for storage and/or further processing via channel 4. The LoRaWAN gateway 200 receives instructions and/or configuration data from the external server 300 via channel 4.

Although the previously discussed embodiments and examples of the present invention have been described separately, it is to be understood that some or all of the above-described features can also be combined in different ways. The above discussed embodiments are particularly not intended as limitations, but serve as examples, illustrating features and advantages of the invention.

## Claims

1. Sensor module (100), comprising:
a first transceiver (101) configured to communicate over a first low-power communication protocol with a first duty cycle, wherein the first low-power communication protocol is the Long Range Wide Area Network, LoRaWAN, protocol;
a second transceiver (102) configured to communicate over a second low-power communication protocol with a second duty cycle, wherein the second low-power communication protocol is a protocol based on Long Range, LoRa, techniques, in particular wherein the second low-power communication protocol is different from the first low-power communication protocol; and
a data acquisition interface (103) configured to acquire data from one or more devices (120, 401 - 406);
wherein the second duty cycle is higher than the first duty cycle, and
wherein the sensor module (100) is configured to receive configuration data via the first transceiver (101), and to transmit the data acquired from the one or more devices (120, 401 -406) via the second transceiver (102).

2. Sensor module (100) according to one of the preceding claims,
wherein the first duty cycle is between 0.1% and 10%; and
wherein the second duty cycle is between 50% and 100%.

3. Sensor module (100) according to one of the preceding claims,
wherein the operation frequency of the second low-power communication protocol is 2.4 GHz.

4. Sensor module (100) according to one of the preceding claims,
wherein the sensor module (100) is further configured to configure the second transceiver (102) and/or the data acquisition interface (103) and/or the one or more devices (120, 401 - 406) based on the configuration data received via the first transceiver (101).

5. Sensor module (100) according to one of the preceding claims, further comprising a processor (108) configured to perform operations on the data acquired from the one or more devices (120, 401 - 406).

6. Sensor module (100) according to one of the preceding claims, wherein at least one of the one or more devices (120) are integrated with the sensor module (100).

7. Sensor module (100) according to one of the preceding claims,
wherein the data acquisition interface (103) comprises an analog-digital-converter (109) .

8. Sensor module (100) according to one of the preceding claims,
wherein the data acquisition interface (103) comprises one or more physical interfaces (104a, 104b) and/or one or wireless interfaces (107), in particular a M-Bus receiver.

9. Sensor module (100) according to any of claims 6 to 8,
wherein the one or more devices (120, 401 - 406) comprise a sensor, in particular a pressure sensor and/or a temperature sensor and/or a voltage meter and/or a current meter and/or a gas meter and/or a water meter and/or an electricity meter and/or a pulse counter and/or a flow meter.

10. System (1) comprising a sensor module (100) according to any of claims 1 to 10, and further comprising a third transceiver (201) configured to receive the data acquired from the one or more devices (120, 401 - 406) transmitted via the second transceiver (102) using the second low-power communication protocol.

11. System (1) according to claim 10, further comprising a LoRaWAN gateway (200) coupled to the third transceiver (201) and configured to communicate with a remote server (300) via a wireless broadband communication protocol and/or an Ethernet communication protocol.

12. System (1) according to claims 10 or 11, further comprising the one or more devices (120, 401 - 406) and/or the external server (300).

13. System (1) according to claim 12, wherein the one or more devices (120, 401 - 406) comprise a sensor, in particular a pressure sensor and/or a temperature sensor and/or a voltage meter and/or a current meter and/or a gas meter and/or a water meter and/or an electricity meter and/or a pulse counter and/or a flow meter.

14. Method for operating a sensor module (100) according to any of claims 1 to 10, comprising:
receiving configuration data over a first low-power communication protocol with a first duty cycle, wherein the first low-power communication protocol is the LoRaWAN protocol;
acquiring data from one or more devices (120, 401 - 406);
transmitting the data acquired from the one or more devices (120, 401 - 406) over a second low-power communication protocol with a second duty cycle, wherein the second low-power communication protocol is a protocol based on LoRa techniques;
wherein the second duty cycle is higher than the first duty cycle.

15. Method according to claim 14, further comprising transmitting the data from a LoRaWan gateway (200) to a remote server (300) via a wireless communication protocol and/or an Ethernet communication protocol.
